(19)

Europäisches
Patentamt
European
Patent Office
Office européen
des brevets

(11) **EP 1 961 802 A1**

(12) **EUROPEAN PATENT APPLICATION**
published in accordance with Art. 158(3) EPC

(43) Date of publication:
    **27.08.2008 Bulletin 2008/35**

(21) Application number: **06833588.4**

(22) Date of filing: **29.11.2006**

(51) Int Cl.:
*C10M 171/00* (2006.01)   *C10M 149/14* (2006.01)
*C10M 149/20* (2006.01)   *C10M 177/00* (2006.01)
*F16C 33/66* (2006.01)   *F16D 3/20* (2006.01)
*C10N 20/00* (2006.01)   *C10N 30/06* (2006.01)
*C10N 40/02* (2006.01)   *C10N 40/04* (2006.01)
*C10N 50/08* (2006.01)   *C10N 70/00* (2006.01)

(86) International application number:
    **PCT/JP2006/323784**

(87) International publication number:
    **WO 2007/063881 (07.06.2007 Gazette 2007/23)**

(84) Designated Contracting States:
    **DE FR**

(30) Priority: **29.11.2005 JP 2005344408**
    **14.02.2006 JP 2006036965**
    **05.06.2006 JP 2006156534**
    **29.06.2006 JP 2006179855**
    **15.09.2006 JP 2006251833**

(71) Applicant: **NTN Corporation**
    **Osaka-shi, Osaka 550-0003 (JP)**

(72) Inventors:
    • **HIMENO, Yoshihide**
      **Kuwana-shi, Mie 511-0811 (JP)**
    • **KOHARA, Mika**
      **Iwata-shi, Shizuoka 438-0037 (JP)**
    • **EGAMI, Masaki**
      **Kuwana-shi, Mie 511-0811 (JP)**

(74) Representative: **Grünecker, Kinkeldey,**
    **Stockmair & Schwanhäusser**
    **Anwaltssozietät**
    **Leopoldstrasse 4**
    **80802 München (DE)**

(54) **POROUS SOLID LUBRICANT, BEARING, AND CONSTANT VELOCITY UNIVERSAL JOINT**

(57)     An object is to provide a solid lubricant having an improved ability to retain lubricating oil and capable of restricting the exuding amount of lubricating oil due to deformation under external force to a necessary minimum, and a bearing or a constant-velocity joint in which such a solid lubricant is sealed.

There is provided a porous solid lubricant comprising as essential components a lubricating component containing lubricating oil, and a resin component, wherein the lubricating component is a solid material which is made porous by foaming, and wherein the lubricating component is occluded in the resin, and a bearing or a constant-velocity joint in which the above porous solid lubricant is sealed. Since the lubricating component is occluded in the resin while foaming the resin component, the lubricating component can be slowly exuded through molecules of the resin due to deformation of the flexible resin under external force such as compression, expansion, bending and twisting. The amount of lubricating oil retained is larger than the amount of oil retained in pores by mere impregnation. Thus, it is possible to provide a bearing which has a long life, can be operated at a high speed, and can be manufactured at a low cost. It is also possible to provide a constant-velocity joint which has a long life and of which the rubber boot is less likely to be damaged.

EP 1 961 802 A1

EP 1 961 802 A1

**Description**

TECHNICAL FIELD

This invention relates to a porous solid lubricant which can supply lubricating oil to sliding portions and rotary portions of machinery, and a bearing and a constant-velocity universal joint using such a lubricant.

BACKGROUND ART

Ordinarily, lubricants are used at sliding and rotary portions of most machines, such as, typically, motor vehicles and industrial machines. Lubricants are roughly classified into liquid lubricants and solid lubricants. There are also known grease, which comprises lubricating oil to which shape retainability is imparted by thickening. Some solid lubricants hold liquid lubricant such that the liquid lubricant does not splash or drip.
For example, solid lubricants are known which comprise lubricating oil or grease in which a high-molecular-weight polyolefin or a urethane resin and its curing agent are mixed so that the lubricating component is held between molecules of the resin and gradually exudes. (Patent documents 1, 2 and 3).
A self-lubricating polyurethane elastomer is also known which is produced by reacting a polyol and a diisocyanate, from which polyurethane is produced, in a lubricating component, in the presence of a lubricant (Patent document 4).
When such a solid lubricant is sealed in a bearing and solidified, lubricating oil gradually exudes. Use of such solid lubricants eliminates the need for one of maintenance jobs, i.e. resupplying of lubricating oil. Also, such solid lubricants serve to prolong the lifespan of the bearing in harsh use environments where large amounts of water are present or in environments where inertia acts on the bearing.
But if such solid lubricant is used at portions of constant-velocity joints where external stresses such as compressive and bending forces are repeatedly applied, a very large force is needed to deform the solid lubricant every time a compression or bending force is applied thereto. Also, because a very large external stresses acts on the solid lubricant, high mechanical strength is required for the portion of the joint supporting the lubricant.
But it is usually difficult for a solid lubricant in e.g. bearings or constant-velocity joints to have both sufficient strength and filling rate. That is, it is difficult to retain a lubricant having high mechanical strength with a high filling rate. This could shorten the lifespan of bearings.
A solid lubricant is therefore desired which has high mechanical strength and which can be filled with a high filling rate in portions where external stresses such compressive and bending forces are repeatedly applied.
It is known to provide an oil-containing lubricant by impregnating a soft resin formed with open pores with lubricating oil, thereby retaining the lubricating oil in the pores, and filling the lubricant in a bearing or a constant-velocity joint (Patent document 5).
Patent document 1: JP Patent Publication 6-41569A
Patent document 2: JP Patent Publication 6-172770A
Patent document 3: JP Patent Publication 2000-319681A
Patent document 4: JP Patent Publication 11-286601A
Patent document 5: JP Patent Publication 9-42297A

DISCLOSURE OF THE INVENTION

OBJECT OF THE INVENTION

But among these conventional techniques, the solid lubricant formed by impregnating a soft resin with lubricating oil is easily deformable under external force, so that although it can follow compressive and bending deformation, its oil retainability is low. Thus, if such a lubricant is used under high-speed conditions, the lubricating oil may be quickly released and run out.
Such oil-containing solid lubricant can be used for short-term lubrication or in a sealed space. But if used in portions which need long-term lubrication or in an open space, the supply of lubricating oil tends to be insufficient, or if its oil retainability is low, excess oil always move in the space by being repeatedly released and absorbed through pores.
If excess lubricating oil that has exuded from such a solid lubricant contacts external parts such as rubber parts, the lubricating oil or its additives may chemically corrode or deteriorate these parts.
When forming such a solid lubricant, a large number of production steps are needed for reliable impregnation with lubricating oil or grease, which pushes up the cost. It is also necessary to meet the requirements not only for providing industrially advantageous, economical lubricant, but for reducing the environment impact and improving the freedom of design.

Further, rolling bearings in which the above-described solid lubricant is sealed has disadvantages that their life is short, that they tend to seize under high-speed rotation, and that the substrate of the lubricant, i.e. the resin component tends to melt due to high heat build-up, so that the lubricant becomes useless. Also, in the full-pack arrangement in which the solid lubricant is filled without gaps, when the solid lubricant is solidified and then cooling step in the bearing, due to contraction of the solid lubricant, the lubricant itself tends to tangle around the rolling elements, thus increasing the torque and heat build-up.

When forming such a solid lubricant, a large number of production steps are needed for reliable impregnation with lubricating oil or grease. This makes it impossible to reduce the cost.

If excess lubricating oil contacts rubber external parts such as a boot mounted on a constant-velocity universal joint so as to cover its shaft and outer race, the lubricating oil or its additives may corrode or deteriorate the rubber parts.

Because a large number of steps are necessary for reliable impregnation with lubricating oil or grease, it is difficult to produce a constant-velocity universal joint at a low cost.

An object of the present invention is to solve these problems and to provide a porous solid lubricant which has improved ability to retain lubricating oil and can minimize the amount of lubricating oil that exudes due to deformation under external force.

Another object of the invention is to provide a solid lubricant which makes it possible to simplify its production steps, thereby reducing the cost of the production steps of devices using the lubricant, such as bearings and constant-velocity joints.

Still another object of the present invention is to provide a bearing in which a porous solid lubricant which is high in lubricity, long in life, and can be rotated at high speed, and which makes it possible to simplify the production steps, thereby reducing its cost.

A further object of the present invention is to provide a constant-velocity universal joint of which the solid lubricant has an improved ability to retain lubricating oil to minimize the amount of lubricating oil that exudes due to deformation under external force, thereby efficiently using the lubricating oil, which is long in life and less likely to damage its rubber boot, and which makes it possible to simply the production steps, thereby reducing its cost.

MEANS TO ACHIEVE THE OBJECT

To achieve these objects, the present invention provides a porous solid lubricant comprising as essential components a lubricating component containing lubricating oil, and a resin component, wherein the lubricating component is a solid material which is made porous by foaming, and wherein the lubricating component is occluded in the resin.

As used herein, the word "occlude" has the same meaning as the technical term "occlude", and means that a liquid (such as a liquid lubricant) is contained in a solid resin in a non-compound state.

According to this invention, since a lubricating component is occluded in a resin with the resin component foamed, due to the softness of the resin, it is possible to exude the lubricating component through spaces between the molecules in controlled manner due to deformation under external forces such as compression, expansion, bending and twisting. It is possible to adjust the amount of lubricating oil that exudes to a necessary minimum by changing the degree of elastic deformation according to the intensity of the external force by e.g. selecting the resin component.

Preferably, the foamed resin component is a resin component foamed to such an extent that the resin component has an open pore rate of not less than 50% so that the lubricating component in the pores can be exuded only in sufficient amounts by deformation.

The resin component comprising a resin or a rubber and having a rubber-like elasticity has an increased surface area due to foaming, so that it is possible to again temporarily retain any excess lubricating oil that has exuded in the pores. This stabilizes the amount of lubricating oil that exudes. Also, by occluding the lubricating component in the resin, and impregnating the pores with the lubricating component, the amount of lubricating oil retained increases compared to an unfoamed state.

Further, the energy necessary to bend the porous solid lubricant according to the present invention is small compared to a non-foamed body, so that it can be flexibly deformed while retaining lubricating oil with high density. Also, since it has large foamed and thus porous portions, it is lightweight.

To obtain such a porous solid lubricant, the expansion ratio of the resin component is preferably 1.1 to 200. To ensure elasticity corresponding to the intensity of the external force and occlusion, the resin component is preferably a polyurethane resin.

The porous solid lubricant using a resin component having rubber-like elasticity is preferably a porous solid lubricant formed by foaming and curing a mixture containing a lubricating component, a liquid rubber having hydroxyl groups in the molecules, a curing agent, and a foaming agent. In this case, the content of the lubricating component is 1 to 80% by weight of the entire mixture and the content of the liquid rubber is 5 to 80% by weight of the entire mixture.

The curing agent may be an isocyanate compound, and the foaming agent may be water.

The mixture may be filled around a sliding member or into a mold, and foamed and cured.

The method of producing the porous solid lubricant using a liquid rubber includes as essential steps a mixing step of mixing a lubricating component, a liquid rubber having hydroxyl groups in the molecules, a curing agent, and a foaming agent to obtain a mixture, a filling step of filling the mixture around a sliding member or into a mold before the completion of foaming and curing, and a foaming/curing step of foaming and curing the filled mixture.

If a polyurethane resin is used as the resin component, the porous solid lubricant is preferably formed by foaming and curing a mixture containing a lubricating component, a urethane prepolymer having isocyanate groups in the molecules, a curing agent, and a foaming agent. Further, the content of the lubricating component is preferably 1 to 90% by weight of the entire mixture. By controlling the contents of the mixture containing the lubricating component, urethane prepolymer, curing agent and foaming agent, it is possible to change the density of the porous solid lubricant.

In this case, the curing agent is preferably an aromatic polyamine compound, and the foaming agent is preferably water.

In the invention in which such polyurethane resins are used, the mixture is preferably filled around a sliding member or a rolling member or into a mold, and foamed and cured.

By retaining the lubricating component in the foamed and cured solid component, the solid component is freely deformable under external force, so that its flexibility especially improves. The lubricating component is present mainly in the solid component, and can be released in a controlled manner to necessary portions by external factors such as compression, bending, twisting and expansion.

The method of producing such a porous solid lubricant preferably includes a mixing step of mixing a lubricating component, a urethane prepolymer having isocyanate groups in the molecules, a curing agent, and a foaming agent to obtain a mixture, a filling step of filling the mixture around a sliding member or a rolling member or into a mold before the completion of foaming and curing, and a foaming/curing step of foaming and curing the filled mixture.

With this arrangement, it is possible to directly produce a porous solid lubricant in the form of a foamed and cured product in which a lubricant is retained. Neither subsequent cutting nor later-stage impregnation is necessary, so that production efficiency improves, and the lubricant can be produced at a low cost.

In order to achieve the objects of increasing the life of a bearing and improving properties during high-speed rotation, there is provided a bearing in which the porous solid lubricant is sealed.

According to this invention, in order to provide a constant-velocity universal joint in which a lubricant is retained between the outer race and the inner race and in which lubricating oil can be efficiently used, which is long in life, and of which the rubber boot is less likely to be damaged, there is provided a constant-velocity universal joint in which a porous solid lubricant of the above predetermined composition is retained between the outer race and the inner race.

The lubricating oil contained in the solid resin in an occluded state never exudes rapidly even when the resin is deformed under external force, so that it is possible to efficiently exude the lubricating oil. This in turn makes it possible to reduce the amount of lubricating oil to a necessary minimum and also reduce damage to the rubber boot.

When forming the porous solid lubricant, the impregnation step is not an essential step, so that it is possible to simplify the manufacturing steps of the constant-velocity universal joint, thereby reducing the production cost.

To provide such a constant-velocity universal joint, the resin component of the porous solid lubricant preferably has an expansion ratio of 1.1 to 200. The resin component is preferably a polyurethane resin to reliably obtain elasticity and occlusion corresponding to external force.

ADVANTAGES OF THE INVENTION

The solid lubricant according to this invention comprises a resin component and a lubricating component with the lubricating component foamed and the lubricating component occluded therein, it is possible to improve the ability to retain the lubricating oil in the solid lubricant, and to minimize the amount of lubricating oil that exudes due to deformation under external force.

That is, with the porous solid lubricant according to this invention, in which the lubricating component is present in the solid component, it has improved flexibility such that it is freely deformable under external stress. It is therefore possible to slowly release lubricating component to necessary areas under the influence of external factors such as compression, bending, twisting and expansion.

Also, with the arrangement of the present invention, it is possible to relatively simplify the production steps, and thus to reduce the cost.

Further, the porous solid lubricant formed by filling the mixture containing liquid rubber around a sliding member or into a mold, and foaming and hardening it needs no later-stage working such as cutting and has a high ability to retain the lubricating component.

In this case, with the production method including the mixing step, filling step and foaming/curing step as essential steps, it is possible to directly produce a foamed and cured product retaining a lubricant, so that no later-stage working such as cutting or impregnation is necessary, which makes it possible to improve production efficiency and reduce the production cost.

The bearing in which the porous solid lubricant is sealed retains a larger amount of the lubricating component in the porous solid lubricant than a lubricating oil retained in pores by mere impregnation. Also, since lubricating oil in the porous solid lubricant is slowly released during operation, this bearing can be operated at a high rotational speed, and its life is long.

Also, by sealing the porous solid lubricant, a lubricant is present near the raceways of the bearing, so that the lubricant can be more smoothly supplied onto the raceways than grease. The porous solid lubricant also serves as seal members for preventing entry of foreign matter such as dust and water. Further, because the solid lubricant is highly porous, it is possible to reduce the weight of the bearing. Moreover, because it is not necessary to seal a lubricant after the bearing has been assembled, its production efficiency is high, so that such a bearing can be manufactured at a low cost.

With the constant-velocity joint according to this invention, because the solid lubricant has an improved ability to retain lubricating oil, it is possible to reduce the exuding amount of lubricating oil due to deformation under external force to a necessary minimum. Also, it is possible to simplify the manufacturing steps and thus to reduce the production cost of the constant-velocity universal joint.

It is possible to simplify the manufacturing steps and reduce the cost of the constant-velocity universal joint.

BRIEF DESCRIPTION OF THE DRAWINGS

Fig. 1 is a schematic view showing how the lubricant is sealed in a radial ball bearing (with no seal members) according to a first embodiment.
Fig. 2 is a schematic view showing how the lubricant is sealed in a radial ball bearing (with seal members) according to a second embodiment.
Fig. 3 is a schematic view showing how the lubricant is sealed in a thrust ball bearing (with no seal members) according to a third embodiment.
Fig. 4 is a schematic view showing how a cylindrical jig is used in the third embodiment.
Fig. 5 is a sectional view of a fourth embodiment, which is a deep groove ball bearing in which the lubricant is sealed.
Fig. 6 is a sectional view of a fifth embodiment, which is a constant-velocity universal joint.
Fig. 7 is a sectional view of a constant-velocity joint according to a sixth embodiment.
Fig. 8 is a sectional view of a constant-velocity joint according to a seventh embodiment.

DESCRIPTION OF NUMERALS

1, 11. Radial ball bearing
2, 12, 22, 33. Inner race
3, 13, 23, 33. Outer race
4, 14, 24, 34. Ball (rolling element)
5. Iron plate
6, 16, 26. Mixture of porous solid lubricant components
7. Bearing outer diameter
15, 35. Seal member
21. Thrust ball bearing
25. Mold
27. Cylindrical jig
28. Porous solid lubricant
31. Deep groove ball bearing
36. Retainer
37. Porous solid lubricant
41. Inner race
42. Outer race
44. Groove
45. Rolling element
46. Cage
47. Shaft

48. Boot
49. Foaming elastic resin
50, 51. Strip fastener
52, 52a, 52b. Solid lubricant

BEST MODE FOR EMBODYING THE INVENTION

The porous solid lubricant embodying the invention of claims 1 to 5 is first described.
The porous solid lubricant according to this invention may contain, among resins (plastics) or rubbers, an elastomer and/or a plastomer as an alloy or copolymer component.

Such a rubber may be natural rubber, isoprene rubber, butadiene rubber, styrene-butadiene rubber, chloroprene rubber, butyl rubber, nitrile rubber, ethylene-propylene rubber, silicone rubber, urethane elastomer, fluororubber, or chlorosulfonated rubber.

The plastic used in the invention may be one of general-purpose and engineering plastics such as polyethylene, polypropylene, polystyrene, polyvinyl chloride, polyacetal, polyamide 4,6 (PA4,6), polyamide 6,6 (PA6,6), polyamide 6T (PA6T), and polyamide 9T (PA9T).

Other than the above-listed plastics and the like, it is also possible to use polyurethane foam such as flexible urethane foam, rigid urethane foam, semi-rigid urethane foam, or polyurethane elastomer.

It is also possible to use one of urethane adhesives, cyanoacrylate adhesives, epoxy resin adhesives, polyvinyl acetate adhesives and polyimide adhesives by foaming and curing it.

The solid components may optionally contain various additives such as pigments, antioxidants, metal deactivators, antistatic agents, flame retardants, antifungal agents, and fillers.

The porous solid lubricant of the embodiment contains as essential components a lubricating component and a resin component. Its lubricating oil can be supplied to the outside of the lubricant under external stress such as compressive force, bending force, centrifugal force, and expansion of bubbles due to a rise in temperature.

Pores formed when the lubricant becomes porous during foaming preferably interconnect with each other so that the lubricating component can be directly supplied from the resin surface to the outside of the lubricant through the open pores. In the case of closed pores, the entire lubricating oil in the resin component (solid component) tends to be temporarily trapped in the closed pores at a high rate, so that the lubricating oil cannot frequently be supplied to the outside when necessary.

According to the present invention, the resin component is preferably foamed so that the open pore rate is not less than 50%. If the open pore rate is less than the predetermined value, the rate of the lubricating oil in the resin component (solid component) that is trapped temporarily in the closed pores is high, which increases the possibility that lubricating oil may not be supplied to outside when necessary.

The open pore rate which is adjusted in this invention is a technical variable that can be calculated as follows.

(1) First, a foamed and cured porous solid lubricant is cut to a size which is suitable for weighing, and the article A thus obtained is weighed. Also, the weight of the lubricating component in the article A and the weight of the resin component in the article A are calculated from their charge amounts.

(2) The weighed article A is subjected to Soxhlet extraction using petroleum benzine as a solvent for three hours. Then, the article A is placed in a constant temperature bath at 80˚C for two hours to completely dry the organic solvent. The thus obtained article B (=resin component + lubricating component trapped in closed pores) is weighed.

(3) From the weight of the lubricating component in A, the weight of the resin component in A, and the weight of B that are obtained in the above manner, the open pore rate is calculated using the following equation.

$$\text{Open pore rate (\%)} = \{1 - (B - \text{Weight of resin component in A})/\text{Weight of lubricating component in A}\} \times 100$$

Since the lubricating component trapped in the closed pores is not released to the outside for the three hours of Soxhlet extraction, the open pore rate can be calculated using the above equation.

In order to retain a lubricating component in such open pores and also to cause a lubricating component to be absorbed between molecules forming the resin, reactive impregnation is preferably used, in which foaming reaction and curing reaction are carried out simultaneously in the presence of a lubricant. With this arrangement, it is possible to charge a large amount of lubricant into the resin, which in turn makes it possible to omit a subsequent impregnation step in which an extra lubricant is added by impregnation.

If a foamed solid body is formed beforehand, and impregnated with a lubricant, it is impossible to infiltrate a sufficient amount of liquid lubricant into the foamed solid body. Such a foamed body has therefore a low ability to retain a lubricant, so that lubricating oil tends to be released in a short period of time. The supply of lubricating oil may therefore run out after a long period of use. Thus, such a subsequent impregnation step is preferably carried out only as an auxiliary means of the reactive impregnation process.

The reactive impregnation process is preferably carried out by uniformly dispersing molecules of the respective raw materials, using a surfactant such as a commercially available silicone foam stabilizer. It is possible to control the surface tension, thereby controlling the characteristics of pores produced (open or closed) and the pore sizes, according to the type and the content of the foam stabilizer.

Such a surfactant may be selected from anionic surfactants, nonionic surfactants, cationic surfactants, ampholytic surfactants, silicone surfactants and fluorine surfactants.

The content of lubricating oil in the lubricating component is preferably 1 to 95% by weight, more preferably 5 to 80% by weight (based on 100% by weight of the lubricating component). If the lubricating oil content is less than 1% by weight, it is difficult to supply lubricating oil to necessary locations. If over 95% by weight, the lubricant may not be solidified with e.g. grease and remain liquid even at a low temperature. The lubricant may thus be unable to reveal properties inherent to solid lubricants.

The lubricating oil used in this invention may be any kind of lubricating oil provided it does not melt the foamed solid component forming the foamed body. For example, it may be lubricating oil, grease, wax or a mixture thereof.

The lubricating oil used in this invention may be any ordinarily used lubricating oil such as paraffin or naphthenic mineral oil, synthetic ester oil, synthetic ether oil, synthetic hydrocarbon oil, GTL base oil, fluorine oil or silicone oil, or a mixture thereof.

If the resin material and the lubricating oil do not dissolve and disperse due to chemical compatibility with each other, such as their polarities, by regulating the viscosity of the lubricating oil, it is possible to easily physically mix them together, thereby preventing segregation of the lubricating oil.

Grease thickeners that can be used in the present invention include, but are not limited to, soaps such as lithium soap, lithium complex soap, calcium soap, calcium complex soap, aluminum soap and aluminum complex soap, and urea compounds such as diurea compounds and polyurea compounds.

Urea thickeners usable in the invention include, but are not limited to, diurea compounds and polyurea compounds.

A diurea compound is obtained e.g. by the reaction between a diisocyanate and a monoamine. The diisocyanate may be e.g. phenylene diisocyanate, diphenyl diisocyanate, phenyl diisocyanate, diphenylmethane diisocyanate, octadecane diisocyanate, decane diisocyanate or hexane diisocyanate. The monoamine may be e.g. octylamine, dodecylamine, hexadecylamine, octadecylamine, oleylamine, aniline, p-toluidine or cyclohexylamine.

A polyurea compound is obtained e.g. by the reaction between a diisocyanate and a monoamine and a diamine. The diisocyanate and the monoamine may be e.g. ones usable for the synthesis of a diurea compound. The diamine may be e.g. ethylenediamine, propanediamine, butanediamine, hexanediamine, octanediamine, phenylenediamine, tolylenediamine or xylenediamine.

The base oil of the grease may be e.g. any of the abovementioned lubricating oils.

The wax used in the grease may be e.g. any of hydrocarbon synthetic wax, polyethylene wax, ketones, amines and hydrogenated oil. The oil component used in such wax may be e.g. any of the abovementioned lubricating oils.

The lubricating component may further contain various other additives including solid lubricants such as molybdenum disulfide and graphite, friction modifiers such as organic molybdenum, oiliness agents such as amines and fats and oils, amine, phenolic and other antioxidants, rust inhibitors such as petroleum sulfonate, dinonylnaphthalene sulfonate and sorbitan ester, sulfur, sulfur-phosphorus and other extreme pressure agents, organic zinc, phosphorus and other anti-wear agents, metal deactivators such as benzotriazole and sodium nitrite, and viscosity index improvers such as polymethacrylate and polystyrene.

Means for foaming the solid component may be a known foaming means, such as a physical process in which water or an organic solvent having a relatively low boiling point, such as acetone and hexane, is heated and vaporized, a mechanical foaming process in which inert gas such as air or nitrogen gas is blown in from outside, and a process in which is used a decomposable foaming agent which decomposes by light or heat and produces nitrogen gas, such as azobisisobutyronitrile (AIBN) or azodicarbonimide (ADCA). If the part of the solid component has highly reactive isocyanate groups as its raw material, chemical foaming may be utilized which is triggered by carbon dioxide produced by chemical reaction between the isocyanate groups and water molecules.

During such foaming reactions, a catalyst is preferably used, such as a tertiary amine catalyst or an organic metal catalyst.

The tertiary amine catalyst may be e.g. one of monoamines, diamines, triamines, cyclic amines, alcohol amines, ether amines, imidazole derivatives and acid-blocked amine catalysts.

The organic metal catalyst may be e.g. stannous octoate, dibutyltin diacetate, dibutyltin dilaurate, dibutyltin mercaptide, dibutyltin thiocarboxylate, dibutyltin maleate, dioctyltin dimercaptide, dioctyltin thiocarboxylate, phenylmercury propionate or lead octenate. A plurality of them may be mixed together for the purpose of e.g. adjusting the balance of reaction.

The expansion ratio of the porous solid lubricant is preferably 1.1 to 200, more preferably 1 to less than 100. If the expansion ratio is less than 1.1, the void volume is too small, so that the lubricant cannot deform under external stress, or the solid body is too hard to be deformed. If the expansion ratio is higher than 200, or according to the intended use, if the expansion ratio is higher than 100, the strength of the lubricant tends to be too low to withstand external stress. Thus, such a lubricant may be damaged or destroyed during use.

The porous solid lubricant may be formed into a predetermined shape by pouring it into a mold. Otherwise, the porous solid lubricant may be cured at normal pressure, and the thus cured lubricant may be formed into a desired shape by cutting and grinding.

Now description is made of a porous solid lubricant and a method of producing such a lubricant according to claims 6 to 9.
The solid component of the porous solid lubricant according to this invention is preferably a urethane resin in view of its heat resisting property, flexibility and cost performance. Its raw material preferably comprises a compound containing two or more isocyanate groups, and a liquid rubber containing two or more hydroxyl groups.

Liquid rubbers having hydroxyl groups in the molecules include hydroxyl-terminated liquid polybutadiene, hydroxyl-terminated liquid polyisoprene, and hydroxyl-terminated liquid polyolefin polyol. Their hydroxyl value is preferably 45 to 120 mg KOH/g. If the hydroxyl value is less than 45 mg KOH/g, forming and curing may be insufficient. If the hydroxyl value is higher than 120 mg KOH/g, the elasticity of the porous solid lubricant may be lost. It is also possible to use a liquid rubber in which the terminal hydroxyl groups are partially modified with isocyanate groups or epoxy groups, provided it contains hydroxyl groups at the terminals. For the purpose of e.g. controlling the physical properties of the foamed body thus produced, two or more kinds of such compounds may be mixed together.

Since such a liquid rubber has a molecular structure similar to that of the below-described lubricating component comprising a paraffin or naphthene mineral oil, it shows excellent chemical compatibility with molecules forming the lubricating component. Thus, it is considered that the molecules of the liquid rubber tangle with the molecules of the lubricating component with a relatively weak interaction. This allows infiltration of a large amount of the lubricating component into the molecules of the liquid rubber, so that the lubricant has a high ability to retain the lubricating component. Thus, when heat or a strong force such as centrifugal force is applied to the lubricant, the interaction between the liquid rubber and the lubricating component is broken, so that the lubricating component is slowly released.

Curing agents usable in this invention are not particularly limited, provided they react with hydroxyl groups as the terminal functional groups of the liquid rubber, thereby extending molecular chains or for crosslinking. Polyisocyates are especially preferable curing agents because they can produce gas by reacting with water as described below.

Polyisocyanates include aromatic, aliphatic and alicyclic polyisocyanates.
Aromatic polyisocyanates include tolylene diisocyanate (hereinafter "TDI"), trimers of TDI, diphenylmethane diisocyanate (hereinafter "MDI"), multimers of MDI, naphthalene diisocyanate (NDI), phenylene diisocyanate, and diphenylene diisocyanate.
Aliphatic polyisocyanates include octadecamethylene diisocyanate, decamethylene diisocyanate, hexamethylene diisocyanate, 2,2,4-trimethylhexamethylene diisocyanate and xylylene diisocyanate.
Alicyclic polyisocyanates include isophorone diisocyanate and dicyclohexylmethane diisocyanate.
It is also possible to use adducts of polyisocyanates and polyols such as trimethyl propane.

By using a terminal isocyanate modified urethane prepolymer as used in a thermosetting urethane as a curing agent, a more elastic urethane is obtained.
When performing the reaction with the hydroxyl groups as the terminal functional groups of the liquid rubber at a high temperature, it is possible to use e.g. a blocked isocyanate of which the isocyanate groups are blocked by blocking agents such as phenols, lactams, alcohols or oximes.

The content ratio of the liquid rubber, which has terminal hydroxyl groups, to the curing agent, which has isocyanate groups, is preferably determined such that the equivalent ratio between the hydroxyl groups (-OH) and the isocyanate groups (-NCO), i.e. OH/NCO, is in the range of 1/(0.9-1.7), more preferably, taking into consideration the foamability and elasticity, in the range of 1/(1.0-1.5).

Lubricating components that can be used in this invention are not particularly limited, provided they do not melt the solid component forming the foamed body. For example, the lubricating component may be lubricating oil, grease, wax or a mixture thereof.

The lubricating oil may be any one of the lubricating oils used in the invention according to any of claims 1 to 4. Grease and other additives are also equally usable.
Among such lubricating oils, paraffin or naphthene mineral oils, synthetic hydrocarbon oils, and GTL base oils are preferable because these oils are highly compatible with the liquid rubber.

The foaming agent may be of any type, provided it can expand and cure the liquid rubber. For example, the foaming agent may be (a) a chemical foaming agent which produces carbon dioxide gas by reacting with an isocyanate compound, such as water, (b) a decomposing foaming agent that produces e.g. nitrogen gas by chemical decomposition when heated or irradiated with light, such as azobisisobutyronitrile (AIBN) or azodicarbonimide (ADCA), (c) a physical foaming agent for heating and vaporizing an organic solvent having a relatively low boiling point such as acetone or hexane, or (d) a mechanical foaming agent for blowing inert gas such as nitrogen or air from outside.

Because in the present invention, an isocyanate compound is used as a curing agent, the foaming agent is preferably water because water produces carbon dioxide by reacting with the isocyanate compound.

For the porous solid lubricant produced by foaming and curing a mixture of a lubricating component, a liquid rubber, a curing agent, and a foaming agent, the content of the lubricating component is 1 to 80% by weight, preferably 30 to 80% by weight, of the entire mixture. If the content of the lubricating component is less than 1% by weight, it is impossible to supply a sufficient amount of e.g. lubricating oil, so that the porous solid lubricant cannot perform its expected function. If higher than 80% by weight, the mixture does not solidify.

The content of the liquid rubber is 5 to 80% by weight, preferably 15 to 80% by weight, of the entire mixture. If the content of the liquid rubber is less than 5% by weight, the mixture does not solidify, so that it does not serve the function as a porous solid lubricant. If higher than 80% by weight, it is impossible to supply a sufficient amount of lubricant, so that the porous solid lubricant cannot perform its lubricity.

The content of the curing agent is determined by the content of the liquid rubber and the expansion ratio, and the content of the foaming agent is determined by the expansion ratio (which is described later). That is, the content of the curing agent is determined by the equivalent amount of the hydroxyl groups of the liquid rubber and the equivalent amount of water.

The expansion ratio of the porous solid lubricant according to the present invention is preferably 1.1 to 200, more preferably 1.1 to 100, further preferably 1.1 to 10. If the expansion ratio is less than 1.1, the volume after foaming is too small, so that the lubricant cannot deform under external stress. If the expansion ratio is higher than the upper limit, according to the intended use, the strength of the lubricant tends to be too low to withstand external stress.

In order to increase the curing speed of the porous solid lubricant, a tertiary amine catalyst or an organic metal catalyst may be used. Tertiary amine catalysts usable in the invention include monoamines, diamines, triamines, cyclic amines, alcohol amines and ether amines. The organic metal catalyst may be e.g. stannous octoate, dibutyltin diacetate, dibutyltin dilaurate, dibutyltin mercaptide, dibutyltin thiocarboxylate, dibutyltin maleate, dioctyltin dimercaptide or dioctyltin thiocarboxylate. A plurality of them may be mixed together for the purpose of e.g. adjusting the balance of reaction.

To the porous solid lubricant according to this invention may be optionally added pigments, antistatic agents, flame-retardants, antifungal agents, fillers, and any other abovementioned additives.

According to this invention, reactive impregnation is preferably used, in which foaming reaction and curing reaction are carried out simultaneously in the presence of a lubricant, in order to charge a large amount of lubricating component and also to increase the strength of the materials. With this arrangement, when the foamed body is formed, the lubricant uniformly infiltrates into pores formed in the foamed body, and simultaneously, the lubricating component is occluded in the foamed and cured solid component. This presumably makes it possible to charge a large amount of lubricant and also to increase the strength of the materials.

In contrast, if a foamed solid body is formed beforehand, and subsequently impregnated with a lubricant, such a foamed body has a low ability to retain a lubricant, so that lubricating oil tends to be released in a short period of time. The supply of lubricating oil may therefore run out after a long period of use.

The method of producing a porous solid lubricant according to this invention comprises a mixing step of mixing a lubricating component, a liquid rubber having hydroxyl groups in the molecules, a curing agent and a foaming agent, a filling step of filling the mixture thus obtained around a sliding member or into a mold before the foaming and curing of the mixture are completed, and a foaming/curing step of foaming and curing the mixture thus filled.

In the mixing step, the method of mixing the liquid rubber, curing agent, lubricating component and foaming agent is not particularly limited. Fro example, they may be mixed together using any ordinarily used agitator such as a Henschel mixer, a ribbon mixer or a juicer mixer.

Because the mixture is quickly cured by the curing agent, it is desirable to put the components other than the curing agent into the agitator first, and the curing agent is put into the agitator later.

In the filling step, the mixture containing the liquid rubber, curing agent, lubricating component and foaming agent is filled around a sliding member or into a mold before the mixture is completely foamed and cured. The liquid rubber is foamed by a foaming agent in the form of carbon dioxide produced by chemical reaction between isocyanate and water in the mixture filled around the sliding member or into the mold. Simultaneously, liquid rubber and the curing agent in the mixture produces a curing reaction. As a result, a foamed product, i.e. a foamed and cured product in the shape of the filling space is formed around the sliding member or in the mold. This foamed body, which is impregnated with a lubricating component, is the porous solid component according to this invention.

In this method, the molecules of the respective raw materials are preferably uniformly dispersed using a surfactant such as a commercially available silicone foam stabilizer. It is possible to control the surface tension according to the type of the foam stabilizer, thereby controlling the type of pores produced (open or closed). Such a surfactant may be selected from anionic surfactants, nonionic surfactants, cationic surfactants, ampholytic surfactants, silicone surfactants and fluorine surfactants.

Devices having sliding members used in the abovementioned method include bearings, universal joints, ball-screws, linear guides, spherical bushes. By filling a mixture containing a lubricating component, a liquid rubber, a curing agent and a foaming agent around the sliding member of one of these devices, and foaming and curing the mixture, it is possible to directly manufacture a device filled with a foamed lubricant.

Such a porous lubricant can also be formed by the above method without using a mold or a device having a sliding member (hereinafter referred to as "a mold or the like"). In this case, the foamed and cured article has to be subsequently formed into a predetermined shape by cutting or grinding. If a mold or the like is not used, because it is difficult to retain the lubricating component in the foamed and cured article, if the lubricant runs short, it is necessary to impregnate the article with a lubricant after shaping the article into a predetermined shape. Even though the cured foamed body is subsequently impregnated with a lubricant, its ability to retain lubricant is low compared to the article formed by using a mold or the like. Also, during handling of such a foamed body, the lubricant tends to leak.

Thus, according to this invention, the method in which the mixture is filled into a mold or the like is preferably used, taking into consideration the quality, workability and cost.

With this arrangement, the lubricating component impregnated into the porous solid lubricant thus formed never exudes rapidly even if the foamed body is deformed under external force. This makes it possible to limit the amount of the lubricating component to a necessary minimum, and still it can maintain its lubricating ability over a long period of time.

Now description is made of the porous solid lubricant and the method of producing the same according to claims 10 to 13 of the present invention.

This porous solid lubricant is a solid material which is made porous by foaming and curing a urethane prepolymer and is a porous solid containing a lubricating component occluded in the resin.

The urethane prepolymer used in the invention of claims 10 to 13 is a urethane prepolymer having isocyanate groups in the molecules. The isocyanate groups may be blocked by other substituent groups. The urethane prepolymer is obtained by reacting organic polyisocyanates with active hydrogen groups.

Organic polyisocyanates include, as mentioned above, aromatic diisocyanates, and aliphatic or alicyclic polyisocyanate compounds. Their specific examples are shown below (some of them are already mentioned above).

Aromatic diisocyanates include diphenylmethane diisocyanate (hereinafter abbreviated to "MDI"), 2,4-tolylene diisocyanate, 2,6-tolylene diisocyanate, and their mixture (hereinafter "TDI"), 1,5-naphthalene diisocyanate, 1,3-phenylene diisocyanate, and 1,4-phenylene diisocyanate.

Aliphatic or alicyclic isocyanates include 1,6-hexamethylene diisocyanate (hereinafter abbreviated to "HDI"), 1,12-dodecane diisocyanate, 1,3-cyclobutane diisocyanate, 1,3-cyclohexane diisocyanate, 1,4-cyclohexane diisocyanate, isopropane diisocyanate, 2,4-hexahydrotolylene diisocyanate, 2,6-hexahydrotolylene diisocyanate, 1,3-hexahydrophenyl diisocyanate, 1,4-hexahydrophenyl diisocyanate, 2,4'-perhydrodiphenylmethane diisocyanate, and 4,4'-perhydrodiphenylmethane diisocyanate.

Polyisocyanate compounds include 4,4',4"-triphenylmethane triisocyanate, 4,6,4'-diphenyl triisocyanate, 2,4,4'-diphenylether triisocyanate, and polymethylene polyphenyl polyisocyanate, and also include ones having these isocyanates partially modified to biuret, allophanate, carbodiimide, oxazolidone, amide or imide.

Compounds having active hydrogen groups include low molecular weight polyols, polyether polyols, polyester polyols and castor oil polyols. One of them may be used alone, or a plurality of them may be mixed together. Low molecular weight polyols include bivalent compounds such as ethylene glycol, diethylene glycol, propylene glycol, 1,4-butanediol, 1,6-hexanediol, neopentyl glycol and hydrogenated bisphenol A, and trivalent or higher-valent (trivalent to octavalent) compounds such as glycerin, trimethylolpropane, hexanetriol, pentaerythritol, sorbitol and sucrose.

Polyether polyols include alkylene oxide (including alkylene oxides having a carbon number of 2 to 4, such as ethylene oxide, propylene oxide or butylene oxide) adducts of the abovementioned low molecular weight polyols, and ring-opened polymers of alkylene oxides. Specifically, they include polyethylene glycol, polypropylene glycol and polytetramethylene ether glycol.

Polyester polyols include polyester polyols, polycaprolactone polyols and polyether ester polyols. Polyester polyols are obtained by condensation polymerization of carboxylic acids (saturated or unsaturated aliphatic carboxylic acids such as adipic acid, azelaic acid, dodecanoic acid, maleic acid, fumaric acid, itaconic acid and dimerized linoleic acid and/or aromatic carboxylic acids such as phthalic acid and isophthalic acid) and polyols (the abovementioned low molecular weight polyols and/or polyether polyols).

Polycaprolactone polyols are obtained by addition polymerization of polymerization initiators such as glycols and triols and ε-caprolactone, α-methyl-ε-caprolactone or ε-methyl-ε-caprolactone in the presence of a catalyst such as organic metal compounds, metal chelate compounds or aliphatic metal acylates. Polyether ester polyols are obtained by addition reaction of polyesters having carboxyl groups and/or OH groups at terminal ends thereof with alkylene oxides such as ethylene oxide or propylene oxide. Castor oil polyols include castor oil, compounds obtained by ester exchange between castor oil or castor oil fatty acid and the abovementioned low molecular weight polyol, polyether polyol or polyester polyol, and esterified polyol.

The urethane prepolymer used in this invention is preferably one containing not less than 2% by weight of isocyanate groups (-NCO). If the content of isocyanate groups is less than this value, it is difficult to achieve both high foamability and high elasticity.

Curing agents usable in this invention include aromatic polyamine such as typically 3,3-dichloro-4,4'-diaminodiphenylmethane (hereinafter abbreviated to "MOCA") and 4,4'-diamino-3,3'-diethyl-5,5'-dimethyl-diphenylmethane, low molecular weight polyols such as typically 1,4-butane glycol and trimethylolpropane, polyether polyols, castor oil polyols and polyester polyols. One of them may be used singly or a plurality of them may be used simultaneously. From an economical viewpoint, aromatic polyamines are preferable.

The content ratio between the urethane prepolymer having isocyanate groups and the curing agent having terminal hydroxyl groups and terminal amine groups is (in the equivalent ratio between hydroxyl groups (-OH) or amine groups ($-NH_2$) and isocyanate groups (-NCO)) preferably (OH or $NH_2$/NCO) = 1/(0.9 to 1.7), and more preferably, in view of the foamability and elasticity, (OH or $NH_2$/NCO) = 1/(1.0 to 1.5).

The solid component may optionally contain additives. Such additives include antioxidants such as typically hindered phenols, reinforcing agents (such as carbon black, white carbon and colloidal silica), inorganic bulking agents (such as calcium carbonate, barium sulfate, talc, clay and silica powder), age inhibitors, flame retardants, metal deactivators, antistatic agents, antifungal agents, fillers and colorants.

Lubricating components usable in this invention are not limited to any particular type, provided they do not melt the solid component forming the foamed body, and may be one of the abovementioned lubricating oil, grease, wax or a mixture thereof.

Foaming agents usable in this invention are not limited to any particular type, provided they can expand urethane prepolymers. Because a urethane prepolymer having isocyanate groups in its molecules is used, water is particularly preferable because water produced carbon dioxide gas by reacting with isocyanate compounds.

The porous solid lubricant according to this invention is obtained by foaming and curing a mixture containing the abovementioned lubricating component, urethane prepolymer, curing agent and foaming agent.

The content of the lubricating component is 1 to 90% by weight, preferably 5 to 80% by weight, of the entire mixture. If the content of the lubricating component is less than 1% by weight, it is impossible to supply a sufficient amount of lubricating oil or the like, so that the porous solid lubricant cannot perform its expected function. If over 90% by weight, the lubricant does not solidify.

The content of the urethane prepolymer having isocyanate groups in the molecules is 8 to 98% by weight, preferably 20 to 80% by weight, of the entire mixture. If less than 8% by weight, the mixture does not solidify, so that the lubricant does not serve as a porous solid lubricant. If over 98% by weight, the lubricant cannot be supplied in a sufficient amount, so that the porous solid lubricant cannot perform its expected function.

The content of the curing agent is determined by the content of the urethane prepolymer and the expansion ratio. The content of the foaming agent is determined by the below-described expansion ratio. That is, the content of the curing agent is determined by the equivalent amount of the hydroxyl groups of the urethane prepolymer having isocyanate groups in the molecules and by the equivalent amount of the water.

The expansion ratio of the porous solid lubricant according to this invention is preferably 1.1 to 100, more preferably 1.1 to 10. If the expansion ratio is less than 1.1, the void volume is too small, so that the lubricant cannot deform under external stress. If higher than 100, the lubricant tends to be too low in strength to withstand external stress.

In the case of such foaming reactions, a catalyst is preferably used, such as, as described above, a tertiary amine catalyst or an organic metal catalyst.

According to this invention, reactive impregnation is preferably used, in which foaming reaction and curing reaction are carried out simultaneously in the presence of a lubricant, in order to charge a large amount of lubricating component and also to increase the strength of the materials.

As described above, the method of producing a porous solid lubricant according to this invention preferably comprises a mixing step of mixing a lubricating component, an urethane prepolymer having isocyanate groups in the molecules, a curing agent and a foaming agent, a filling step of filling the mixture thus obtained around a sliding member or into a mold before the foaming and curing of the mixture are completed, and a foaming/curing step of foaming and curing the mixture thus filled.

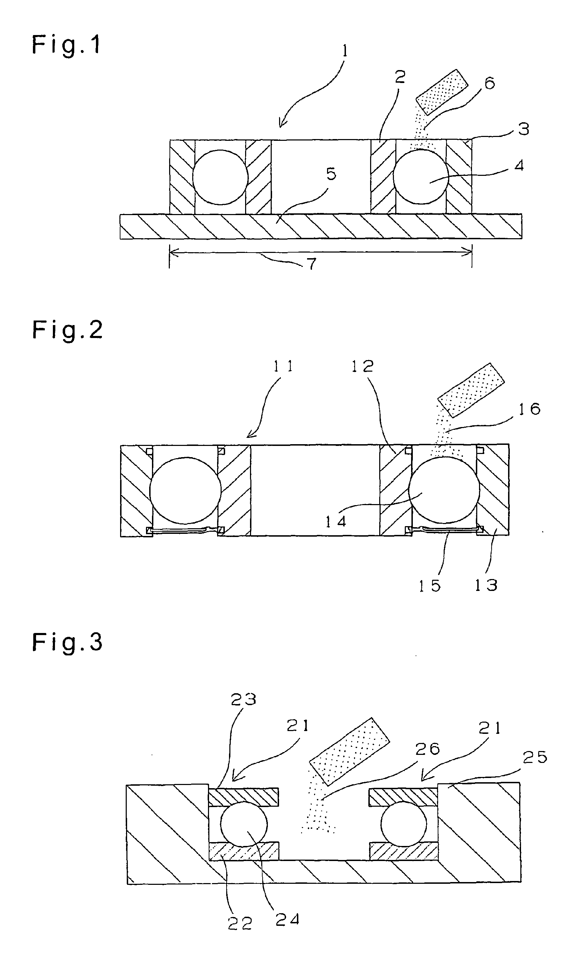

Bearings embodying the invention in which porous solid lubricant is sealed are described with reference to Figs. 1 to 5.

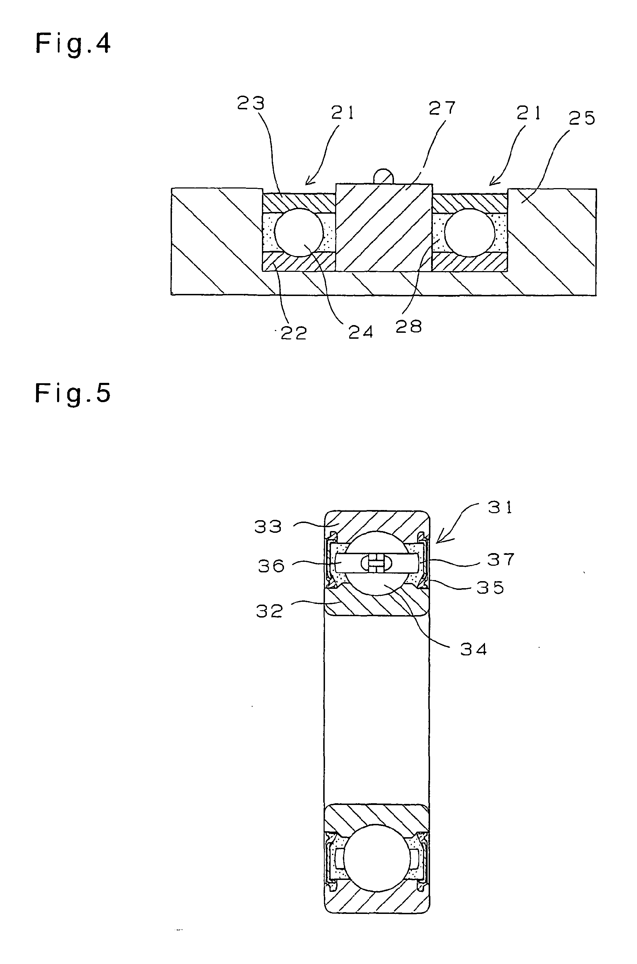

First, as shown in Fig. 5, such a bearing 31 comprises an inner race 32, an outer race 33 arranged concentric with the inner race 32, a plurality of rolling elements 34 disposed between the inner and outer races, a retainer 36 retaining the rolling elements 34, and seal members 35 fixed e.g. to the outer race 33.

The porous solid lubricant is sealed in such bearings in the manner as shown in Figs. 1 to 3.

Fig. 1 shows how the lubricant is sealed in a radial ball bearing (with no seal members). As shown in this figure, the bearing 1, which comprises the inner race 2, the outer race 3, and the rolling elements 4, which are disposed between the inner and outer races, is placed on a iron plate 5 or a similar jib having a diameter larger than the outer diameter 7 of the bearing, and a sufficiently agitated mixture 6 of the porous solid lubricating components is poured, immediately before foaming, into the space defined by the inner race 2, the outer race 3 and the iron plate 5 and foamed and cured.

In this case, after pouring the mixture 6 into the bearing 1, an iron plate 5 or a similar jig having a larger diameter than the bearing outer diameter 7 may be placed on the bearing 1. If an iron plate or a jig is placed on the bearing, the filling rate of the porous solid lubricant in the bearing increases. Upon completion of foaming and curing of the mixture 6, the iron plate 5 of the similar jig is removed to obtain a bearing in which the porous solid lubricant is sealed.

Fig. 2 shows how the lubricant is sealed in a radial ball bearing (having seal members). The bearing 11, which comprises an inner race 12, an outer race 13, rolling elements 14 disposed between the inner and outer races, and a seal member 15 provided on one side only, is set in a stationary position with the seal member located downward.

In this state, a sufficiently agitated mixture 16 of the porous solid lubricating components is poured, immediately before forming, into the bearing 11 and foamed and cured. In this case, as in the case of Fig. 1, in order to improve the filling rate of the porous solid lubricant in the bearing, after pouring the mixture 16 into the bearing 11, an iron plate or a similar jig having a diameter larger than the bearing outer diameter may be placed on the bearing 11. The upper seal member may be fitted on the bearing during foaming instead of the jig for improving the filling rate, or upon completion of foaming and curing.

Fig. 3 shows how the lubricant is sealed in a thrust ball bearing. Fig.

4 schematically shows how a cylindrical jig is used in Fig. 3.

As shown in Figs. 3 and 4, a mold 25 is prepared in which the thrust ball bearing 21 can be received, and the bearing 21, which comprises an inner race 22, an outer race 23, and rolling elements 24 disposed between the inner and outer races, is placed in the mold 25. From radially inside of the bearing 21, a sufficiently agitated mixture 26 of porous solid lubricating components is poured, immediately before foaming, into the bearing 21. A cylindrical jig 27 having the same diameter as the inner diameter of the bearing is then inserted into the bearing, and the mixture is foamed and cured. When the mixture 26 is foamed and cured into a porous solid lubricant 28, the mold 25 and the cylindrical jig 27 are removed to obtain a bearing in which the porous solid lubricant is sealed.

The lubricant may be sealed in a bearing using e.g. an injection molding machine. In this case, the bearing is mounted in a mold, and the porous solid lubricating components are mixed by the screw and sealed into the bearing through the nozzle.

Thus, as shown in Fig. 5, the porous solid lubricant 37 is sealed around the rolling elements 34 of the bearing 31.

With the thus formed bearing filled with the porous solid lubricant, the lubricating component impregnating the porous solid lubricant never rapidly exudes even if the foamed body is deformed under external force, so that it is possible to efficiently exude the lubricating component onto sliding surfaces. This in turn makes it possible to minimize the amount of the lubricating component needed, prolong the lifespan of the bearing, and to operate the bearing at a higher rotational speed.

Constant-velocity joints embodying the present invention are now described with reference to the drawings.

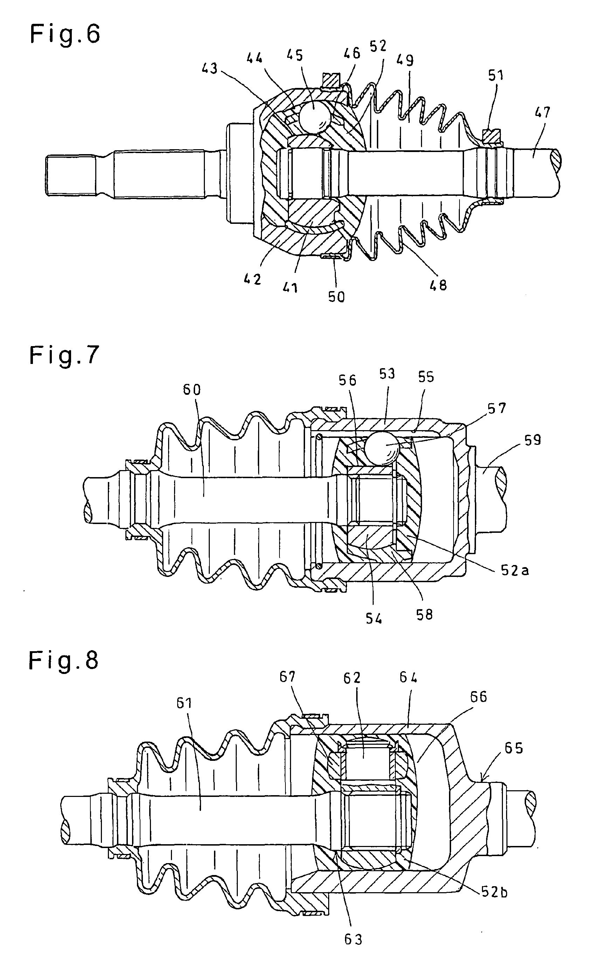

As shown in Fig. 6, the constant-velocity universal joint according to the fifth embodiment is a ball fixed joint (BJ) comprising an inner race 41 having a plurality of axial grooves 43 formed in its outer surface, an outer race 42 having in its inner surface a plurality of axial grooves 44 each radially opposing one of the grooves 43, rolling elements 45 in the form of balls each received between a pair of the grooves 43 and 44, and a cage (retainer) 46 rollably guiding the rolling elements 45. With this arrangement, any change in the intersecting angle between the shafts of the inner and outer races 41 and 42 is allowed by axial movements of the rolling elements 45 relative to the respective grooves 43 and 44, and rotation torque can be transmitted between the inner and outer races 41 and 42 through the rolling elements 45 and their respective grooves 43 and 44.

A porous solid lubricant 52 is filled into the outer race 42 so as to cover the inner race 41, the rolling elements 45 and the entire cage 46. A boot 48 in the form of a rubber bellows is fitted on the joint so as to straddle the outer periphery of the outer race 42 and the outer periphery of the shaft 47 secured to the inner race 41. The boot 48 is tightened by boot clamps 50 and 51 to hermetically seal the joint.

The boot 48 is made of a rubber having sealability, tear resistance, oil resistance, heat resistance and wear resistance that are sufficiently high to withstand use, such as chloroprene rubber or thermoplastic polyester elastomer (Hytrel, made by Du Pont-Toray Co., Ltd.). The boot may further contain plasticizers, softening agents, lubricants, antioxidants or reinforcing agents.

As described above, the porous solid lubricant according to this invention may contain, among resins (plastics) or rubbers, an elastomer and/or a plastomer as an alloy or copolymer component.

Lubricating components and foaming means may also be used as described above. The lubricating oil may be of any type, provided it doest not melt the solid member forming the foamed body, such as lubricating oil, grease, wax or a mixture thereof.

The porous solid lubricant may be formed by pouring the mixture into a mold, or may be formed into a predetermined shape by cutting or grinding after solidifying the mixture at normal pressure. Otherwise, the mixture may be filled into the outer race of the constant-velocity universal joint, ordinarily between the inner and outer races, and foamed and cured. Then, the boot is mounted to provide a constant-velocity universal joint.

The porous solid lubricant may be sealed in any known constant-velocity universal joint of the type other than that of the fifth embodiment. For example, such lubricant may be sealed in a fixed type constant-velocity universal joint other than a ball-fixed joint (sometimes abbreviated to BJ) as described in the fifth embodiment, such as an undercut-free joint (sometimes abbreviated to UJ). Some of such BJ's and UJ's include six balls, and others include eight balls.

When the porous solid lubricant is sealed in BJ's or UJ's, since the lubricant is filled only at portions where the lubricant is necessary, it is possible to minimize the cost and the weight. Also, because the working angle during use is large, the lubricant tends to be markedly compressed and bent, so that the lubricant can be more easily supplied to sliding portions.

Sliding type constant-velocity universal joints include double offset joints (sometimes abbreviated to DOJ), tripod joints (sometimes abbreviated to TJ), and cross groove joints (sometimes abbreviated to LJ).

Description is further made in detail with reference to the drawings. As shown in Fig. 7, a double offset joint (DOJ) according to the sixth embodiment includes an outer race 53 having six or eight equiangularly spaced axial track grooves 55 formed on its inner surface, and a spherical inner race 54 having six or eight equiangularly spaced axial track grooves 56. Six or eight balls 57 are each disposed between a pair of the track grooves 55 and 56, and held in position by a cage 58. The cage 58 has a spherical outer surface and a spherical inner surface 58 complementary to the outer surface of the inner race. Thus, when the outer race shaft 59 rotates, the inner race shaft 60 is rotated about its axis through the balls 17 at a constant speed.

When the joint rotates with the outer race shaft 59 and the inner race shaft 60 forming an intersection angle, the balls 57 are held by the cage 58 without a play in the direction of the track grooves 55 and 56. The balls 57 therefore reciprocate in the direction of the grooves not by rolling but mainly by sliding.

The porous solid lubricant 52a is filled in such a DOJ at predetermined portions.

As shown in Fig. 8, a tripod joint (TJ) according to the seventh embodiment includes an inner race shaft 61 having a tripod portion 63 provided at one end thereof and carrying three journals 62 therearound, and a joint shaft portion 65 having a tubular portion 64 at one end thereof in which the tripod portion can be inserted.

The TJ has three axial track grooves 66 in the inner surface of the tubular portion 64. A roller unit is mounted on each journal 62 so that its spherical roller 67 is rotatable relative to the journal. The tripod portion 63 is inserted into the tubular portion 64 of the joint shaft portion 65 such that the spherical roller 67 of each roller unit is guided by a pair of side walls defining one of the track grooves 66. In this state, the porous solid lubricant 52b is filled at predetermined portions.

Because such a TJ or the aforementioned DOJ needs an axial gap within which each ball or roller can slide, it is necessary to seal a greater amount of grease in such a joint than in a fixed type joint such as the aforementioned BJ. But the porous solid lubricant 52 can be filled at necessary portions only. Thus, by sealing the porous solid lubricant in a DOJ or a TJ, it is possible to most significantly reduce the cost and weight of the joint.

EXAMPLE 1

Raw materials used in Examples of the invention and Comparative Examples are comprehensively listed below. Table 1 shows the composition of the solid lubricant of each example, and various measurement results thereof.

  (a) Urethane prepolymer (PLACCEL EP-1130, made by Daicel Chemical Industries, Ltd.)
  (b) Amine curing agent (Ihara-Cuamine MT, made by Ihara Chemical Industry Co., Ltd.)
  (c) Water (Ion-exchanged water)
  (d) Silicone foam stabilizer (SRX298, made by Dow Corning Toray Silicone Co., Ltd.)
  (e) Urea grease (Pyronoc Universal N6C, made by Nippon Oil Corporation)
  (f) Isocyanate (Coronate T80, made by Nippon Polyurethane Industry Co., Ltd.)
  (g) Polyether polyol (Preminol SX4004, made by Asahi Glass Co., Ltd.)
  (h) Amine catalyst (TOYOCAT DB2, made by Tosoh Corporation)
  (i) Lubricating oil (Turbine 100, made by Nippon Oil Corporation)

[Examples 1 and 2 of the invention]

A silicone foam stabilizer and urea grease were added by the amounts shown in Table 1 to an urethane prepolymer, and the mixture was sufficiently agitated at 120˚C. An amine curing agent was then added, and after agitation, water as a foaming agent was added. The mixture was then left in a thermostatic bath kept at 120˚C for one hour to cure the mixture. A porous solid lubricant was thus obtained.

[Example 3 of the invention]

A silicone foam stabilizer, mineral oil, amine catalyst and water as a foaming agent were added by the amounts shown in Table 1 to a polyether polyol, and the mixture was sufficiently agitated at 90˚C. An isocyanate was added thereto and sufficiently agitated. After confirming foaming reaction, the mixture was left in a thermostatic bath kept at 90˚C for 15 minutes. A porous solid lubricant was thus obtained.

[Comparative Example 1]

An unfoamed lubricant was produced from the components shown in Table 1 (in the amounts shown in Table 1) by the same method as used in Example 1 of the invention.

[Comparative Example 2]

A foamed body was synthesized from the same components as used in Example 2 of the invention, except mineral oil, by the same method as used in Example 2 of the invention. Oil was impregnated later to form a foamed body.

[Reference Example 1]

A porous solid lubricant was synthesized from the same components as used in Example 3 of the invention, except silicone foam stabilizer, by the same method as used in Example 3 of the invention to form a porous solid lubricant of which the open pore rate is less than 50%.
For the thus obtained solid lubricants, measurements were made of the expansion ratio, resilience and oil separation under centrifugal force, and determination was made on whether the individual lubricants are usable. The resilience was measured under JISK6400-3.
The oil separation under centrifugal force is the reduction rate of oil based on the charge amount of oil after the rotor having a radius of 75 mm is rotated at a speed of 1500 rpm for one hour. The open pore rate was calculated based on the abovementioned equation.
## Table 1

| Number / Components (% by weight) and evaluated items | | Example of the invention | | | Comparative Example | | Reference Example |
|---|---|---|---|---|---|---|---|
| | | 1 | 2 | 3 | 1 | 2 | 1 |
| Components | (a) Urethane prepolymer | 55 | 50 | — | 56 | — | — |
| | (b) Amine curing agent | 4 | 4 | — | 4 | — | — |
| | (c) Water | 2 | 2 | 0.5 | — | 0.5 | 0.5 |
| | (d) Silicone foam stabilizer | 2 | 2 | 0.5 | — | 0.5 | — |
| | (e) Urea grease | 37 | 25 | — | 40 | — | — |
| | (f) Isocyanate | — | — | 8.5 | — | 8.5 | 8.5 |
| | (g) Polyether polyol | — | — | 20 | — | 20 | 20 |
| | (h) Amine catalyst | — | — | 0.5 | — | 0.5 | 0.5 |
| | (i) Lubricating oil | — | 17 | 70 | — | (70) | 70.5 |
| Oil impregnation type | | Reactive | Reactive | Reactive | Non-foaming reactive | Later-stage impregnation | Reactive |
| ① | Expansion ratio | 5 | 4 | 20 | 1 | 18 | 15 |
| ② | Resilience (%) | 8.8 | 9.5 | 5.9 | 25 | 5.9 | 5.5 |
| ③ | Oil weight reduction rate (%) | 5 | 10 | 7 | 6 | 40 | 5 |
| ④ | Open pore rate (%) | 80 | 70 | 75 | 0 | 60 | 40 |
| General evaluation | | O | O | O | × | × | △ |
| Bearing endurance test (lifespan; hours) | | 1200 (Example of the invention 13) | 1500 (Example of the invention 14) | | 300 (Comparative Example 6) | 50 (Comparative Example 7) | |

As will be apparent from the results of Table 1, Example 1 of the invention, which is a foamed body, is elastically deformed to a greater degree (and thus is smaller in resilience) than Comparative Example 1, which is an unfoamed body, when subjected to the same kinetic energy (inertia force). This indicates that the porous solid lubricants of Example of the invention can withstand the use in a driving space where external stress such as compression is applied, wherein conventional lubricants were not usable.

For the solid lubricant of Comparative Example 2, which is of the same composition as Example 1 of the invention, but wherein mineral oil is impregnated at a later stage, the amount of oil separation was large compared to Example 1 of the invention, of which the mineral oil is occluded in the resin simultaneously with foaming. This indicates that by reactive impregnation of the lubricant, lubricating oil is sufficiently occluded in the resin solid content, so that a solid lubricant is provided which is capable of controlled release of lubricant.

Also, from Examples of the invention and Comparative Examples, it is apparent that by occluding lubricating oil in the resin by carrying out reactive impregnation simultaneously with foaming, oil retaining force due to occlusion is higher than by retaining lubricating oil in the pores by simply impregnating the foamed resin body with lubricating oil.

Further, Reference Example, of which the open pore rate is less than 50%, is inferior to Example 3 of the invention in that the amount of oil separation is small under centrifugal force. But taking into consideration other factors such as the resilience, it withstands use and can be considered to belong in the present invention.

[Examples 4 to 7 of the invention, which are directed to the invention in which is used liquid rubber, according to claims 6 to 9, and Comparative Examples 3 and 4]

The components in Table 1 except isocyanate were added by the amounts shown in Table 2 and sufficiently mixed together. Isocyanate was then added and the components were quickly mixed together. 20.6 g of the thus obtained mixture was filled in a polytetrafluoroethylene container (100 mm diameter x 150 mm high). Several seconds later, foaming reaction started. The mixture was left to stand for several hours to allow it to cure at normal temperature to obtain test samples. From each test sample, 1 g was accurately weighed out and subjected to a controlled oil release test using a centrifugal (rotor radius: 9.9 mm; revolving speed: 850 rpm). The lubricant weight change rate was calculated based on the following equation, and evaluated.

$$\text{Lubricant weight change rate (\%)} = 100 \times (\text{Lubricant weight before test} - \text{Lubricant weight after test})/\text{Lubricant weight before test}$$

The lower the thus calculated weight change rate (%), the smaller the amount of the lubricant released and the higher the ability to retain the lubricant. According to the present invention, those of which the weight change ratio is 0.5% or over and 10% or less were determined to be superior in the ability to retain lubricant.

Table 2

| | | Example of the invention | | | | Comparative Example | |
|---|---|---|---|---|---|---|---|
| | | 4 | 5 | 6 | 7 | 3 | 4 |
| Content of foamed lubricants ( % by weight) | | | | | | | |
| Liquid rubber | Poly bd (made by Idemitsu Kosan) | 42 | 28 | 14 | 28 | 42 | - |
| Isocyanate | Coronate T80 (made by Nippon Polyurethane) | 15 | 10 | 5 | 10 | 15 | - |
| Water | Ion exchanged water | 0.75 | 0.5 | 0.25 | 0.5 | 0.75 | - |
| Foam stabilizer | SRX298 (made by Dow Corning Toray) | 0.75 | 0.5 | 0.25 | 0.5 | 0.75 | - |
| Catalyst | Triethylenediamine (made by Wako Pure Chemical) | 1.5 | 1 | 0.5 | 1 | 1.5 | - |
| Lubricating oil | Turbine 100 (made by Nippon Oil) | 40 | 60 | 80 | 30 | 40[1) | 40[1) |

(continued)

| Content of foamed lubricants ( % by weight) | | | | | | | |
|---|---|---|---|---|---|---|---|
| Lubricating grease | N6D (made by Nisseki Mitsubishi) | - | - | - | 30 | - | - |
| Polyol MIX | NEF-337 (made by Nippon Polyurethane) | - | - | - | - | - | 40 |
| Isocyanate MIX | CEF-268 (made by Nippon Polyurethane) | - | - | - | - | - | 20 |
| Total content | | 100 | 100 | 100 | 100 | 100 | 100 |
| Lubricant weight change rate (%), one hour later | | 2.5 | 3.4 | 5.8 | 4.1 | 28.2 | 32.9 |
| 1) Later-stage impregnation into the foamed body | | | | | | | |

As will be apparent from the results of Table 2, for Comparative Examples 3 and 4, the release rate of the lubricating oil is so high that the lubricating oil runs out quickly under centrifugal force. Thus, their lifespan is short. In contrast, for Examples 4 to 7 of the invention, because the lubricant is gradually released under centrifugal force, lubrication is possible with a minimum amount of oil.

[Examples 8 to 12, directed to claims 10 to 13, in which polyurethane prepolymer is used, and Comparative Example 5]

The components shown in Table 1, except curing agent, amine catalyst and foaming agent, were sufficiently mixed together by the amounts shown in Table 1 in a polytetrafluoroethylene beaker (60 mm diameter x 150 mm high) kept at 80˚C. Then, MOCA melted at 120˚C was put in the beaker and sufficiently agitated. An amine catalyst and a forming agent were then added and sufficiently agitated. Several seconds later, foaming reaction started. The mixture was left to stand for 30 minutes at 100˚C to allow it to cure. The test samples thus obtained were observed visually and under an optical microscope. Those which are elastic rubber foamed bodies on which oil exudes when pressed with a finger were determined to be excellent porous solid lubricants, and the symbol "○" was affixed thereto in Table 1. Comparative Example 1 did not solidify.
The test samples obtained were subjected to a lubricating oil controlled release test to determine the controlled releasability of the lubricant. The results are shown in Table 3.

<Lubricating oil controlled releasability test>

Each test sample was placed in a centrifugal having a rotor radius of 75 mm and the centrifugal was rotated at 1500 rpm for one hour. The lubricant weight change rate before and after the test was measured. The lubricant weight change rate was calculated based on the following equation and evaluated.
$$\text{Lubricant weight change rate (\%)} = 100 \times (\text{Lubricant weight before test} - \text{Lubricant weight after test}) / \text{Lubricant weight before test}$$

The lower the thus calculated weight change rate (%), the smaller the amount of the lubricant released and the higher the ability to retain the lubricant.
Table 3

| | | Example of the invention | | | | | Comparative Example |
|---|---|---|---|---|---|---|---|
| | | 8 | 9 | 10 | 11 | 12 | 5 |
| Contents of foamed lubricants (% by weight) | | | | | | | |
| Urethane prepolymer | PLACCEL EP-1130 (made by Daicel Chemical) | 48 | 48 | 55 | - | - | 7 |

(continued)

| Contents of foamed lubricants (% by weight) | | | | | | | |
|---|---|---|---|---|---|---|---|
| Urethane prepolymer | Coronate 4090 (made by Nippon Polyurethane) | - | - | - | 48 | - | - |
| Urethane prepolymer | Coronate 4047 (made by Nippon Polyurethane) | - | - | - | - | 48 | - |
| Curing agent | MOCA (made by Ihara Chemical) | 2.5 | 2.5 | 2.5 | 3.3 | 3.3 | 0.5 |
| Foaming agent | Ion exchanged water | 0.35 | 0.35 | 0.35 | 0.36 | 0.36 | 0.125 |
| Foam stabilizer | SRX298 (made by Dow Coming Toray) | 0.25 | 0.25 | 0.3 | 0.24 | 0.24 | 0.125 |
| Amine catalyst | DM70 (made by Tosoh) | 0.3 | 0.3 | 0.3 | 0.24 | 0.24 | 0.25 |
| Lubricating oil | Turbine 100 (made by Nippon Oil) | 36.6 | - | 41.55 | 29.86 | 22.86 | 92- |
| Grease | Pyronoc Universal N6C (made by Nippon Oil) | 12 | 48.6 | | 18 | 25 | |
| Total content | | 100 | 100 | 100 | 100 | 100 | 100 |
| Feel to the touch | | ○ | ○ | ○ | ○ | ○ | Not solidified |
| Lubricant weight change rate (%) | | 35 | 7 | 55 | 20 | 42 | Not solidified |
| 1) Caprolactone urethane prepolymer 2) Ether urethane prepolymer 3) Ester urethane prepolymer | | | | | | | |

As shown in Table 3, Examples 8 to 12 of the invention are elastic rubber foamed bodies on which oil exudes when pressed by a finger, and are considered to be excellent porous solid lubricants. Comparative Example 5 was foamed but did not partially solidify, so that it did not serve as a porous solid lubricant. In contrast, it was discovered that for Examples 8 to 12 of the invention, the lubricant never runs out instantly under centrifugal force but is gradually released.

[Example 13 of the invention]

A silicone form stabilizer and urea grease were added by the amounts shown in Example 1 of the invention in Table 1 to a urethane prepolymer as a resin component, and the mixture was sufficiently agitated at 120˚C. To this mixture, an amine curing agent was added and sufficiently agitated. Then, water as a foaming agent was added and the mixture was filled into the internal space of a ball bearing 6204, The bearing was then placed in a thermostatic bath kept at 120˚C and left to stand for one hour to allow the lubricant to cure, thereby obtaining a test sample of a bearing in which the porous solid lubricant is sealed. The test sample obtained was subjected to the below-identified bearing endurance test to measure the durable lifespan of the bearing. The results are shown in Table 1.

<Bearing endurance test>

With a radial load of 6 N and a thrust load of 67 N applied to the test sample obtained, the test sample was rotated at 10000 rpm at 100˚C, and the time period until the input current of the electric motor driving the rotary shaft exceeds the limit current (i.e. when the turning torque exceeds twice the starting torque).

[Example 14 of the invention]

A silicone form stabilizer, lubricating oil, amine catalyst and water as a foaming agent were added by the amounts shown in Example 2 of the invention in Table 1 to a polyether polyol as a resin component, and the mixture was sufficiently agitated at 90˚C. To this mixture, an isocyanate was added and sufficiently agitated. Then, the mixture was filled into the internal space of a ball bearing 6204, The bearing was then placed in a thermostatic bath kept at 90˚C and left to stand for 15 minutes, thereby obtaining a test sample of a bearing in which the porous solid lubricant is sealed. The test sample obtained was subjected to the abovementioned bearing endurance test to measure the durable lifespan of the bearing. The results are shown in Table 1.

[Comparative Example 6]

Using the components shown in Table 1 by the amounts shown in Table 1, a test sample of a bearing in which an unfoamed lubricant is sealed was obtained by the same method as used in Example 13 of the invention except that the resin component was not foamed. The test sample obtained was subjected to the above-described endurance test to measure the durable lifespan (time period). The results are shown in Table 1.

[Comparative Example 7]

Using the components shown in Table 1, except lubricating oil, a foamed body was formed and filled in a ball bearing 6204 with the same method as used in Example 14 of the invention. The foamed body obtained was impregnated with lubricating oil to obtain a test sample of a bearing in which a foamed lubricant of the later-stage impregnation type is sealed. The test sample obtained was subjected to the above-described endurance test to measure the durable lifespan (time period). The results are shown in Table 1.

As will be apparent from the results shown in Table 1, compared to Comparative Examples 6 and 7, it was confirmed that Examples 13 and 14 of the invention can maintain good lubricity under high-speed rotation, and have a long lifetime.

As shown in Table 4, raw materials used in Examples 15 and 16 and Comparative Examples 13 and 14 and the lubricating oil impregnating methods used in these examples are identical to each other with only the expansion ratios different from each other.

[Examples 15 and 16 of the invention]

As shown in Fig. 6, an inner race 41, a cage 46 and rolling elements (steel balls) 45 were mounted in an outer race 42 of a constant-velocity universal joint (EBJ82, made by NTN Corporation). In a separate step, a silicone foam stabilizer and urea grease were added by the amounts shown in Table 14 to a urethane prepolymer, and the mixture was sufficiently agitated at 120˚C. To this mixture, an amine curing agent was added, and after agitating, water as a foaming agent was added. Then, the porous solid lubricant 52 obtained was filled between the outer race 42 and the inner race 41 of the constant-velocity universal joint assembled in the above manner, and foamed. The joint was then left to stand in a thermostatic bath kept at 120˚C for one hour to allow the mixture to cure, thereby obtaining a constant-velocity universal joint in which a foamed solid lubricant is retained.

[Example 17 of the invention]

A silicone foam stabilizer, mineral oil, amine catalyst and water as a foaming agent were added by the amounts shown in Table 4 to a polyether polyol, and the mixture was sufficiently agitated at 90˚C. To the mixture, an isocyanate was added and sufficiently agitated. The porous solid lubricant 52 thus obtained was filled between the outer race 42 and the inner race 41 of the assembled constant-velocity universal joint, and foamed. The joint was then left to stand in a thermostatic bath kept at 90˚C to cure the lubricant, thereby obtaining a constant-velocity universal joint in which a porous solid lubricant is retained.

[Comparative Example 8]

Except that unfoamed lubricant having the composition shown in Table 4 was used, a constant-velocity universal joint retaining a solid lubricant was obtained in exactly the same manner as used in Example 14 of the invention.

[Comparative Example 9]

Using the components shown in Table 4, except mineral oil, a foamed body was synthesized by the same method as used in Example 15 of the invention. Oil impregnation was carried out later to obtain a constant-velocity universal joint retaining a porous lubricant of the later-stage impregnation type. For each of the foamed bodies obtained in Examples 14 and 15 of the invention and Comparative Examples 8 and 9, the expansion ratio was measured which is the volume of the foamed body after foaming divided by the volume before foaming. The expansion ratios thus measured are shown in Table 4.

[Reference Example 2]

Using the components shown in Table 4, except silicon foam stabilizer, a formed body was synthesized in the same manner as Example 3 of the invention, as a porous solid lubricant of which the open pore rate is less than 50%. For each of the foamed bodies obtained in Examples 15-17 of the invention, Comparative Examples 8 and 9, and Reference Example 2, the expansion ratio was measured which is the volume of the foamed body after foaming divided by the volume before foaming. The expansion ratios thus measured are shown in Table 4. Their open pore ratios were measured based on the above-described equation.

The thus obtained constant-velocity joints of Examples of the invention and Comparative Examples were subjected to an endurance test under the conditions of 245 Nm in torque, 6 degrees in angle and 1000 rpm for 10 hours. After the test, the degrees of breakage and damage of each solid lubricant were determined based on visual observation and observation under an optical microscope. The results are shown in Table 4 by the symbol ○, which means that no breakage and damage was observed, so that the joint was continuously usable, the symbol △, which means that the solid lubricant was not broken, but an excessive amount oil separated, and the symbol X, which means that the solid lubricant was broken or damaged and not usable thereafter.

Table 4

| Number<br>Components (% by weight)<br>and evaluated items | | Example of the invention | | | Comparative Example | | Reference Example |
|---|---|---|---|---|---|---|---|
| | | 15 | 16 | 17 | 8 | 9 | 2 |
| Components | (a) Urethane prepolymer | 55 | 50 | — | 56 | — | — |
| | (b) Amine curing agent | 4 | 4 | — | 4 | — | — |
| | (c) Water | 2 | 2 | 0.5 | — | 0.5 | 0.5 |
| | (d) Silicone foam stabilizer | 2 | 2 | 0.5 | — | 0.5 | — |
| | (e) Urea grease | 37 | 25 | — | 40 | — | — |
| | (f) Isocyanate | — | — | 8.5 | — | 8.5 | 8.5 |
| | (g) Polyether polyol | — | — | 20 | — | 20 | 20 |
| | (h) Amine catalyst | — | — | 0.5 | — | 0.5 | 0.5 |
| | (i) Lubricating oil | — | 17 | 70 | — | (70) | 70.5 |
| Oil impregnation type | | Reactive | Reactive | Reactive | Non-foaming reactive | Later-stage impregnation | Reactive |
| ① | Expansion ratio | 5 | 4 | 20 | 1 | 18 | 15 |
| ② | Open pore rate (%) | 80 | 70 | 75 | 0 | 60 | 40 |
| Evaluation of constant-velocity universal joints after endurance test | | ○ | ○ | ○ | × | × | △ |

As will be apparent from the results of Fig. 4, the porous solid lubricant in Example 15 of the invention was less likely to be damaged or broken, and thus was more durable, i.e. usable for a longer period of time, than the unfoamed solid lubricant of Comparative Example 8, in spite of the fact these lubricants have the same composition.

For Comparative Example 19, of which the solid lubricant contains mineral oil retained by later-stage impregnation only, oil separated in a larger amount (which means that an excessive amount of oil which does not contribute to lubrication is released) than for Example 16 of the invention under the same centrifugal force, in which mineral oil was occluded in the resin simultaneously with foaming, in spite of the fact that these lubricants have the same composition.

Also, from these Examples of the invention and Comparative Examples, it is apparent that by reactive impregnation carried out simultaneously with foaming, the lubricating oil is occluded in the resin, so that the oil retaining force is higher due to occlusion than when lubricating oil is retained in pores simply by impregnating the foamed resin body in lubricating oil.

Reference Example 2, of which the open pore rate is less than 50%, is not desirable in that the amount of oil separation is smaller under centrifugal force than Example 17 of the invention. But because the results of the endurance test is good, Reference Example 2 can be considered to be within the scope of this invention.

**Claims**

1. A porous solid lubricant comprising as essential components a lubricating component containing lubricating oil, and a resin component, wherein said lubricating component is a solid material which is made porous by foaming, and wherein said lubricating component is occluded in the resin.

2. The porous solid lubricant of claim 1 wherein the foamed resin component is a resin component foamed to such an extent that the resin component has an open pore rate of not less than 50%.

3. The porous solid lubricant of claim 1 or 2 wherein said resin component comprises a resin having rubber-like elasticity or a rubber, and is capable of exuding the lubricating component when deformed under external force.

4. The porous solid lubricant of claim 1 or 2 wherein the expansion ratio of the resin component is 1.1 to 200.

5. The porous solid lubricant of claim 1 or 2 wherein the resin component is a polyurethane resin.

6. The porous solid lubricant of claim 1 or 2 wherein the porous solid lubricant is formed by foaming and curing a mixture containing a lubricating component, a liquid rubber having hydroxyl groups in the molecules, a curing agent, and a foaming agent, and wherein the content of said lubricating component is 1 to 80% by weight of the entire mixture and the content of said liquid rubber is 5 to 80% by weight of the entire mixture.

7. The porous solid lubricant of claim 6 wherein said curing agent is an isocyanate compound, and wherein said foaming agent is water.

8. The porous solid lubricant of claim 6 or 7 wherein said mixture is filled around a sliding member or into a mold, and foamed and cured.

9. A method of producing the porous solid lubricant of claim 6, said method comprising a mixing step of mixing a lubricating component, a liquid rubber having hydroxyl groups in the molecules, a curing agent, and a foaming agent to obtain a mixture, a filling step of filling said mixture around a sliding member or into a mold before the completion of foaming and curing, and a foaming/curing step of foaming and curing the filled mixture.

10. The porous solid lubricant of claim 5 wherein the porous solid lubricant is formed by foaming and curing a mixture containing a lubricating component, a urethane prepolymer having isocyanate groups in the molecules, a curing agent, and a foaming agent, and wherein the content of said lubricating component is 1 to 90% by weight of the entire mixture.

11. The porous solid lubricant of claim 10 wherein said curing agent is an aromatic polyamine compound, and said foaming agent is water.

12. The porous solid lubricant of claim 10 or 11 wherein said mixture is filled around a sliding member or a rolling member or into a mold, and foamed and cured.

13. A method of producing the porous solid lubricant of claim 10, said method comprising a mixing step of mixing a lubricating component, a urethane prepolymer having isocyanate groups in the molecules, a curing agent, and a foaming agent to obtain a mixture, a filling step of filling said mixture around a sliding member or a rolling member or into a mold before the completion of foaming and curing, and a foaming/curing step of foaming and curing the filled mixture.

14. A bearing in which the porous solid lubricant of claim 1 or 2 is sealed.

15. A constant-velocity universal joint wherein the porous solid lubricant of claim 1 or 2 is retained between an outer race and an inner race thereof.

Fig.1

Fig.2

Fig.3

Fig.4

Fig.5

## Fig.6

## Fig.7

## Fig.8

<table>
<tr><td colspan="2" align="center"><b>INTERNATIONAL SEARCH REPORT</b></td><td>International application No.<br><br>PCT/JP2006/323784</td></tr>
</table>

| A. CLASSIFICATION OF SUBJECT MATTER |
|---|
| C10M171/00(2006.01)i, C10M149/14(2006.01)i, C10M149/20(2006.01)i, C10M177/00(2006.01)i, F16C33/66(2006.01)i, F16D3/20(2006.01)i, C10N20/00(2006.01)n, C10N30/06(2006.01)n, C10N40/02(2006.01)n, According to International Patent Classification (IPC) or to both national classification and IPC |

| B. FIELDS SEARCHED |
|---|
| Minimum documentation searched (classification system followed by classification symbols)<br>C10M171/00, 149/14-149/22, 177/00, C10N20/00, 30/06, 40/02-40/04, 50/08, 70/00, F16C33/66, F16D3/20-3/229 |
| Documentation searched other than minimum documentation to the extent that such documents are included in the fields searched<br>  Jitsuyo Shinan Koho          1922-1996   Jitsuyo Shinan Toroku Koho   1996-2007<br>  Kokai Jitsuyo Shinan Koho    1971-2006   Toroku Jitsuyo Shinan Koho   1994-2007 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| X<br>Y | JP 62-241997 A  (Armco Inc.),<br>22 October, 1987 (22.10.87),<br>& US 4623472 A | 1-9,14-15<br>10-13 |
| X<br>Y | JP 8-3259 A  (Inoac Corp.),<br>09 January, 1996 (09.01.96),<br>(Family: none) | 1-9<br>10-13 |
| X | JP 50-73904 A  (General Electric Co.),<br>18 June, 1975 (18.06.75),<br>& CA 1060877 A          & DE 2438114 A1<br>& FR 2248315 A1          & GB 1461935 A<br>& IT 1022865 B           & US 3894956 A<br>& US 4008788 A | 1-5,14-15 |

☒ Further documents are listed in the continuation of Box C.　　　☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>  20 February, 2007 (20.02.07) | Date of mailing of the international search report<br>  27 February, 2007 (27.02.07) |
|---|---|
| Name and mailing address of the ISA/<br>  Japanese Patent Office | Authorized officer |
| Facsimile No. | Telephone No. |

Form PCT/ISA/210 (second sheet) (April 2005)

**EP 1 961 802 A1**

| | INTERNATIONAL SEARCH REPORT | International application No. |
|---|---|---|
| | | PCT/JP2006/323784 |

C (Continuation). DOCUMENTS CONSIDERED TO BE RELEVANT

| Category* | Citation of document, with indication, where appropriate, of the relevant passages | Relevant to claim No. |
|---|---|---|
| X | JP 11-351252 A (Nippon Mektron, Ltd.), 24 December, 1999 (24.12.99), (Family: none) | 1-5,14-15 |
| X | JP 11-335657 A (NTN Corp.), 07 December, 1999 (07.12.99), (Family: none) | 1-5,14-15 |
| X | JP 9-42297 A (NTN Corp.), 10 February, 1997 (10.02.97), (Family: none) | 1-4,14-15 |
| X | JP 63-256693 A (Idemitsu Kosan Co., Ltd.), 24 October, 1988 (24.10.88), (Family: none) | 1-4,14-15 |
| X | JP 47-22361 B1 (Otaraito Kabushiki Kaisha), 23 June, 1972 (23.06.72), (Family: none) | 1-4,14-15 |
| X | JP 6-330075 A (Tsubakimoto Chain Co.), 29 November, 1994 (29.11.94), (Family: none) | 1-4,14-15 |
| Y | JP 6-172770 A (Kyodo Yushi Co., Ltd.), 21 June, 1994 (21.06.94), (Family: none) | 10-13 |
| Y | JP 2000-319681 A (Koyo Seiko Co., Ltd., et al.), 21 November, 2001 (21.11.01), (Family: none) | 10-13 |

Form PCT/ISA/210 (continuation of second sheet) (April 2005)

| INTERNATIONAL SEARCH REPORT | International application No. |
|---|---|
| | PCT/JP2006/323784 |

Continuation of A. CLASSIFICATION OF SUBJECT MATTER
 (International Patent Classification (IPC))

C10N40/04(2006.01)n, C10N50/08(2006.01)n, C10N70/00(2006.01)n

(According to International Patent Classification (IPC) or to both national classification and IPC)

**EP 1 961 802 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6041569 A
- JP 6172770 A
- JP 2000319681 A
- JP 11286601 A
- JP 9042297 A